# FASCICULE DE BREVET EUROPEEN

(11) **EP 3 135 971 B1**
(45) Date de publication et mention de la délivrance du brevet: **31.10.2018**
(21) Numéro de dépôt: 16185715.6
(22) Date de dépôt: 25.08.2016
(51) Int. Cl.: F16K 35/06, F16K 35/02, F16K 5/06

(54) **SYSTÈME AMÉLIORÉ POUR LE FREINAGE D'UNE VANNE**
VERBESSERTES SYSTEM ZUM BREMSEN EINES VENTILS
IMPROVED SYSTEM FOR BRAKING A VALVE

(30) Priorité: 26.08.2015 FR 1557926
(43) Date de publication de la demande: 01.03.2017
(73) Titulaire: ArianeGroup SAS, 75015 Paris (FR)
(72) Inventeur: BLANC, Bruno, 78440 BRUEIL EN VEXIN (FR); LLANOS GARCIA, Jesus, 27200 VERNON (FR); CARON, Anthony, 76000 ROUEN (FR)
(74) Mandataire: Gilbey, Vincent

(56) Documents cités:
- WO-A1-2012/001552
- US-A- 3 429 553
- US-A1- 2014 217 319

## Description

### DOMAINE TECHNIQUE GENERAL

La présente invention concerne le domaine vannes (voir US3429553A), et plus précisément des systèmes pour le freinage de vannes trouvant une application particulière pour les vannes de moteurs d'engins spatiaux.

### ETAT DE L'ART

Dans le cadre d'applications spatiales, les objectifs en termes de fiabilité conduisent à une recherche de simplification des différents composants. On cherche ainsi à limiter le nombre de pièces mobiles, et notamment pour les vannes de moteurs qui ne sont ainsi plus actionnées lors du vol, mais uniquement lors des opérations de calibrage au sol. Les différents actionneurs réalisant de manière conventionnelle le pilotage de la vanne moteur peuvent ainsi être supprimés afin de simplifier la conception de la vanne.

Cependant, la vanne intervient lors des opérations de réglage du moteur au sol, notamment au travers de sa perte de charge. Il est donc nécessaire de pouvoir actionner cette vanne au sol afin de régler sa perte de charge et ainsi obtenir le point de fonctionnement souhaité du moteur. Il faut ensuite maintenir ce point de fonctionnement du moteur pour le vol, avec la même vanne sans son actionneur.

Il est donc nécessaire de concevoir un système de freinage pour une vanne de moteur, conciliant une structure simple, permettant de laisser libre le mouvement de l'axe de boisseau lorsque l'actionneur est monté sur la vanne pour le réglage du moteur au sol, et un maintien en position précis de l'axe du boisseau une fois ce réglage effectué et l'actionneur de la vanne démonté.

### PRESENTATION DE L'INVENTION

La présente invention vise à répondre au moins en partie à ces problématiques, et propose ainsi un système de freinage d'une vanne à boisseau, comprenant :
- un axe de boisseau, mobile en rotation autour d'un axe longitudinal, et lié en rotation à un corps de vanne, l'axe de boisseau présentant un arbre formé selon l'axe longitudinal,
- une pièce de freinage, montée mobile en translation selon l'axe longitudinal,
   caractérisé en ce que
- l'axe de boisseau présente une portion d'indexation comprenant une première rampe et une seconde rampe, les deux rampes étant aménagées autour de l'arbre, dans une même direction, et selon des sens de rotation contraires autour de l'arbre,
- la pièce de freinage présente une première et une seconde portion d'indexation, adaptées pour sélectivement venir au contact de la première et de la seconde rampe respectivement,
la pièce de freinage étant configurée de manière à pouvoir être positionnée sélectivement dans :
- une position libre, dans laquelle la pièce de freinage n'est pas au contact des rampes de l'axe de boisseau, et
- une position de verrouillage, dans laquelle les première et seconde portions d'indexation sont au contact des première et seconde rampes respectivement, de sorte que la première rampe et la première portion d'indexation immobilisent l'axe de boisseau en rotation autour de l'axe longitudinal selon un premier sens de rotation, et la seconde rampe et la seconde portion d'indexation immobilisent l'axe de boisseau en rotation autour de l'axe longitudinal selon un second sens de rotation opposé au premier sens de rotation.

La portion d'indexation de l'axe de boisseau comprend typiquement un plateau aménagé sur l'arbre et s'étendant radialement autour de l'arbre, les première et seconde rampes s'étendant d'une surface dudit plateau, lesdites rampes étant aménagées de manière concentrique autour de l'arbre.

La première portion d'indexation peut comprendre une surface de contact formant une portion de rampe complémentaire à la première rampe, et la seconde portion d'indexation peut comprendre une surface de contact formant une portion de rampe complémentaire à la seconde rampe.
En variante, la première portion d'indexation peut comprendre deux surfaces de contact formant chacune une portion de rampe complémentaire à la première rampe, et la seconde portion d'indexation peut comprendre deux surfaces de contact formant chacune une portion de rampe complémentaire à la seconde rampe.
Les deux surfaces de contact de la première portion d'indexation sont alors typiquement disposées de part et d'autre de l'axe longitudinal, et les deux surfaces de contact de la seconde portion d'indexation sont disposées de part et d'autre de l'axe longitudinal.

Le système peut comprendre un mécanisme d'immobilisation de la pièce de freinage en translation selon une direction longitudinale définie par l'axe longitudinal.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- La figure 1 présente une vue d'un exemple d'axe de boisseau de vanne selon un aspect de l'invention ;
- La figure 2 représente une vue d'un exemple de pièce de freinage pour cet axe de boisseau ;
- Les figures 3 à 5 illustrent l'interaction entre l'axe de boisseau et la pièce de freinage représentés sur les figures 1 et 2.

Sur l'ensemble des figures, les éléments en commun sont repérés par des références numériques identiques.

### DESCRIPTION DETAILLEE

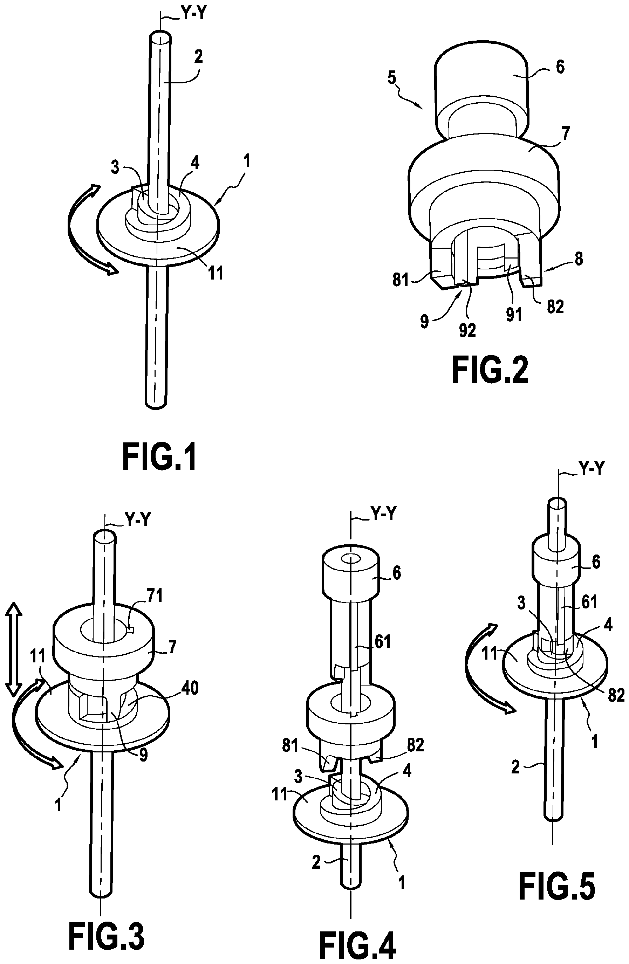

La figure 1 présente une vue d'un exemple d'axe de boisseau de vanne selon un aspect de l'invention.
On représente sur cette figure un axe de boisseau 1, s'étendant selon un axe longitudinal Y-Y, l'axe de boisseau 1 étant mobile en rotation autour de cet axe longitudinal Y-Y.
Le corps de vanne n'est pas représenté sur la figure.

L'axe de boisseau 1 tel que présenté comprend un plateau 11, prenant ici la forme d'un disque s'étendant radialement autour de l'axe longitudinal Y-Y.
L'axe de boisseau 1 présente de plus une portion d'indexation comprenant ici une première rampe 3 et une seconde rampe 4, les deux rampes 3 et 4 étant aménagées autour de l'axe longitudinal Y-Y, dans une même direction à partir du plateau 11, et selon des sens de rotation contraires autour de l'axe longitudinal Y-Y.

Dans l'exemple illustré, la première rampe 3 est aménagée autour de l'axe longitudinal Y-Y, et va en s'éloignant du plateau 11 selon un sens de rotation horaire.
La seconde rampe 4 est quant à elle aménagée autour de la première rampe 3, et va en s'éloignant du plateau 11 selon un sens de rotation antihoraire.

Les deux rampes 3 et 4 sont donc coaxiales, la première rampe 3 étant ici disposée entre l'axe longitudinal Y-Y et la seconde rampe 4.
Dans l'exemple représenté, les deux rampes 3 et 4 forment chacune un tour complet autour de l'axe longitudinal Y-Y.

La figure 2 représente une vue d'un exemple de pièce de freinage 5 pour l'axe de boisseau 1 présenté sur la figure 1.
La pièce de freinage 5 telle que représentée est adaptée pour coulisser le long de l'axe longitudinal Y-Y, afin de sélectivement venir au contact de l'axe de boisseau 1 pour permettre de sélectivement l'immobiliser en rotation autour de cet axe longitudinal Y-Y.

La pièce de freinage 5 telle que représentée comprend un fourreau interne 6 et une bague externe 7, disposée autour d'une portion du fourreau interne 6.
Dans le cas où la pièce de freinage 5 est ainsi formée de deux éléments, le fourreau interne 6 et la bague externe 7 comprennent des moyens d'indexation en rotation selon l'axe longitudinal Y-Y, par exemple un couple nervure/rainure aménagés dans ces deux éléments, ainsi qu'une indexation en translation selon l'axe longitudinal Y-Y ou une butée limitant ce déplacement.

La pièce de freinage 5 comprend une première 8 et une seconde 9 portion d'indexation, adaptées pour sélectivement venir au contact de la première et de la seconde rampe 30 et 40 respectivement.
Dans l'exemple représenté, la première portion d'indexation 8 comprend deux portions de spirale 81 et 82, disposées de part et d'autre de l'axe longitudinal Y-Y.
De même, dans l'exemple représenté, la seconde portion d'indexation 9 comprend deux portions de spirale 91 et 92, disposées de part et d'autre de l'axe longitudinal Y-Y.

Comme on le verra par la suite, ces portions de spirale 81, 82, 91 et 92 sont dimensionnées de manière à venir au contact des première et seconde rampes 30 et 40, lorsque la pièce de pilotage 5 est mise en appui contre l'axe de boisseau 1.

D'autres modes de réalisation des portions d'indexation 8 et 9 sont également possibles ; elles peuvent par exemple être formées chacune d'une unique portion de spirale, ou de multiples portions de spirales, ou encore de portions formant des contacts ponctuels ou linéaires avec les première et seconde rampes 30 et 40.

Les figures 3 à 5 illustrent l'interaction entre l'axe de boisseau 1 et la pièce de freinage 5 décrit précédemment.

La figure 3 représente l'axe de boisseau 1 ainsi que la pièce de freinage 5 montée sur l'axe longitudinal Y-Y de l'axe de boisseau 1.
La pièce de freinage 5 est alors maintenue à distance du boisseau 1, de manière à ne pas être au contact de son plateau 11 ou de ses rampes 3 et 4.
L'axe de boisseau 1 est alors libre en rotation selon l'axe Y-Y par rapport à la pièce de freinage 5.

Comme on le voit sur les figures 3, 4 et 5, dans le mode de réalisation représenté, le fourreau interne 6 comprend une nervure longitudinale 61, coopérant avec une rainure longitudinale 71 de la bague externe 7 afin d'assurer un verrouillage en rotation du fourreau interne 6 par rapport à la bague externe 7.

Les figures 4 et 5 illustrent le fourreau interne 6 et la bague externe 7 de la pièce de freinage 5 mis au contact des rampes 3 et 4 de l'axe de boisseau 1, par exemple par un système de blocage ou manuellement par l'utilisateur.

On comprend bien que le fourreau interne 6 et la bague externe 7 de la pièce de freinage 5 viennent au contact de l'axe de boisseau 1 simultanément ; les figures 4 et 5 visent uniquement à en détailler le fonctionnement.

Comme visible sur la figure 4, lors du contact de la bague externe 7 contre l'axe de boisseau 1, la seconde portion d'indexation 9 vient au contact de la seconde rampe 4. Or, en mettant ainsi la seconde portion d'indexation 9 au contact de la seconde rampe 4, ces dernières réalisent un verrouillage en rotation de l'axe de boisseau 1 autour de l'axe longitudinal Y-Y selon un premier sens de rotation, à savoir le sens horaire dans le mode de réalisation représenté. Les portions d'indexation 91 et 92 forment typiquement des portions de rampe complémentaires à la seconde rampe 4.

En effet, la structure de la seconde rampe 4 dont la surface s'éloigne progressivement du plateau 11 de l'axe de boisseau 1 implique qu'une rotation horaire entrainerait un déplacement axial de la bague externe 7, dans le sens d'un éloignement par rapport au plateau 11 de l'axe de boisseau 1.
Or, la pièce de freinage 5 est munie d'une butée axiale ou est verrouillée en translation par un système empêchant un tel déplacement axial, ce qui assure donc le verrouillage en rotation de l'axe de boisseau 1 autour de l'axe longitudinal Y-Y selon un premier sens de rotation, à savoir le sens horaire dans le mode de réalisation représenté.

De manière similaire, comme visible sur la figure 5, lors du contact du fourreau interne 6 contre l'axe de boisseau 1, la première portion d'indexation 8 vient au contact de la première rampe 3. Or, en mettant ainsi la première portion d'indexation 8 au contact de la première rampe 3, ces dernières réalisent un verrouillage en rotation de l'axe de boisseau 1 autour de l'axe longitudinal Y-Y selon un second sens de rotation opposé au premier sens de rotation, à savoir le sens antihoraire dans le mode de réalisation représenté. Les portions d'indexation 81 et 82 forment typiquement des portions de rampe complémentaires à la première rampe 3.

En effet, la structure de la première rampe 30 dont la surface s'éloigne progressivement du plateau 11 de l'axe de boisseau 1 implique qu'une rotation antihoraire entrainerait un déplacement axial du fourreau interne 6, dans le sens d'un éloignement par rapport au plateau 11 de l'axe de boisseau 1.
Or, la pièce de pilotage 5 est munie d'une butée axiale ou est verrouillée en translation par le système empêchant un tel déplacement axial, ce qui assure donc le verrouillage en rotation de l'axe de boisseau 1 autour de l'axe longitudinal Y-Y selon un second sens de rotation, à savoir le sens antihoraire dans le mode de réalisation représenté.

On comprend à la lecture de ce qui précède que la réalisation de deux rampes 3 et 4 s'éloignant chacune du plateau 11 de l'axe de boisseau 1 selon des sens de rotation contraires autour de l'axe longitudinal Y-Y permet d'assurer un verrouillage complet en rotation autour de cet axe longitudinal Y-Y, chacune des rampes 3 et 4 coopérant respectivement avec les portions d'indexation 8 et 9 pour assurer un verrouillage selon un sens de rotation autour de l'axe longitudinal Y-Y.

Le mécanisme proposé permet ainsi d'immobiliser de manière fiable une vanne en position souhaitée suite à une opération de calibrage au sol, et ainsi de maintenir la vanne dans cette position sur un système en opération.

De plus, la structure proposée est flexible, les portions d'indexation et les rampes permettant de s'adapter à la position de l'axe de boisseau 1.

En outre, ce système présente une structure simple, impliquant un nombre limité de pièces de faible volume, et a donc une masse totale limitée par rapport à un système de verrouillage conventionnel, ce qui est très avantageux notamment pour les applications spatiales, pour lesquelles les critères de masse, d'encombrement et de fiabilité sont capitaux.

## Revendications

1. Système de freinage d'une vanne à boisseau, comprenant
- un axe de boisseau (1), mobile en rotation autour d'un axe longitudinal (Y-Y), et lié en rotation à un corps de vanne, l'axe de boisseau (1) présentant un arbre (2) formé selon l'axe longitudinal
- une pièce de freinage (5), montée mobile en translation selon l'axe longitudinal (Y-Y),
**caractérisé en ce que**
- l'axe de boisseau (1) présente une portion d'indexation comprenant une première rampe (3) et une seconde rampe (4), les deux rampes (3, 4) étant aménagées autour de l'arbre (2), dans une même direction, et selon des sens de rotation contraires autour de l'arbre (2),
- la pièce de freinage (5) présente une première (8) et une seconde (9) portion d'indexation, adaptées pour sélectivement venir au contact de la première (3) et de la seconde (4) rampe respectivement,
la pièce de freinage (5) étant configurée de manière à pouvoir être positionnée sélectivement dans :
- une position libre, dans laquelle la pièce de freinage (5) n'est pas au contact des rampes (3, 4) de l'axe de boisseau (1), et
- une position de verrouillage, dans laquelle les première et seconde portion d'indexation (8, 9) sont au contact des première et seconde rampes (3, 4) respectivement, de sorte que la première rampe (3) et la première portion d'indexation (8) immobilisent l'axe de boisseau (1) en rotation autour de l'axe longitudinal (Y-Y) selon un premier sens de rotation, et la seconde rampe (4) et la seconde portion d'indexation (9) immobilisent l'axe de boisseau (1) en rotation autour de l'axe longitudinal (Y-Y) selon un second sens de rotation opposé au premier sens de rotation.

2. Système selon la revendication 1, dans lequel la portion d'indexation de l'axe de boisseau comprend un plateau (11) aménagée sur l'arbre (2) et s'étendant radialement autour de l'arbre (2), les première et seconde rampes (3, 4) s'étendant d'une surface dudit plateau (11), lesdites rampes (3, 4) étant aménagées de manière concentrique autour de l'arbre (2).

3. Système selon l'une des revendications 1 ou 2, dans lequel, la première portion d'indexation (8) comprend une surface de contact formant une portion de rampe complémentaire à la première rampe (3), la seconde portion d'indexation (9) comprend une surface de contact formant une portion de rampe complémentaire à la seconde rampe (4).

4. Système selon l'une des revendications 1 ou 2, dans lequel la première portion d'indexation (8) comprend deux surfaces de contact (81, 82) formant chacune une portion de rampe complémentaire à la première rampe (3), la seconde portion d'indexation (9) comprend deux surfaces de contact (91, 92) formant chacune une portion de rampe complémentaire à la seconde rampe (4).

5. Système selon la revendication 4, dans laquelle les deux surfaces de contact (81, 82) de la première portion d'indexation (8) sont disposées de part et d'autre de l'axe longitudinal (Y-Y), et les deux surfaces de contact (91, 92) de la seconde portion d'indexation (9) sont disposées de part et d'autre de l'axe longitudinal (Y-Y).

6. Système selon l'une des revendications 1 à 5, dans lequel le mécanisme de blocage comprend un système d'immobilisation de la pièce de freinage (5) en translation selon une direction longitudinale définie par l'axe longitudinal (Y-Y).

## Patentansprüche

1. System zum Bremsen eines Drehschieberventils, umfassend:
- eine Drehschieberachse (1), die in Rotation um eine Längsachse (Y-Y) bewegbar ist und in Rotation mit einem Ventilkörper verbunden ist, wobei die Drehschieberachse (1) eine Welle (2) aufweist, die gemäß der Längsachse gebildet ist,
- ein Bremsstück (5), das translatorisch bewegbar gemäß der Längsachse (Y-Y) gebildet ist,
**dadurch gekennzeichnet, dass**
- die Drehschieberachse (1) einen Indexierungsabschnitt aufweist, der eine erste Rampe (3) und eine zweite Rampe (4) umfasst, wobei die beiden Rampen (3, 4) um die Welle (2) in derselben Richtung und in entgegengesetzten Drehrichtungen um die Welle (2) angeordnet sind,
- das Bremsstück (5) einen ersten (8) und einen zweiten (9) Indexierungsabschnitt aufweist, die geeignet sind, selektiv mit der ersten (3) bzw. der zweiten (4) Rampe in Kontakt zu gelangen,
wobei das Bremsstück (5) ausgelegt ist, selektiv positioniert werden zu können in:
- einer freien Position, in der das Bremsstück (5) mit den Rampen (3, 4) der Drehschieberachse (1) nicht in Kontakt steht, und
- einer Verriegelungsposition, in welcher der erste und zweite Indexierungsabschnitt (8, 9) mit der ersten bzw. zweiten Rampe (3, 4) in Kontakt stehen, so dass die erste Rampe (3) und der erste Indexierungsabschnitt (8) die Drehschieberachse (1) in Rotation um die Längsachse (Y-Y) in einer ersten Drehrichtung immobilisieren, und die zweite Rampe (4) und der zweite Indexierungsabschnitt (9) die Drehschieberachse (1) in Rotation um die Längsachse (Y-Y) in einer zweiten Drehrichtung entgegengesetzt zur ersten Drehrichtung immobilisieren.

2. System nach Anspruch 1, wobei der Indexierungsabschnitt der Drehschieberachse eine Platte (11) umfasst, die an der Welle (2) angeordnet ist und sich radial um die Welle (2) erstreckt, wobei sich die erste und zweite Rampe (3, 4) von einer Fläche der Platte (11) erstrecken, wobei die Rampen (3, 4) konzentrisch um die Welle (2) angeordnet sind.

3. System nach einem der Ansprüche 1 oder 2, wobei der erste Indexierungsabschnitt (8) eine Kontaktfläche umfasst, die einen Rampenabschnitt komplementär zur ersten Rampe (3) bildet, und der zweite Indexierungsabschnitt (9) eine Kontaktfläche umfasst, die einen Rampenabschnitt komplementär zur zweiten Rampe (4) bildet.

4. System nach einem der Ansprüche 1 oder 2, wobei der erste Indexierungsabschnitt (8) zwei Kontaktflächen (81, 82) umfasst, die jeweils einen Rampenabschnitt komplementär zur ersten Rampe (3) bilden, und der zweite Indexierungsabschnitt (9) zwei Kontaktflächen (91, 92) umfasst, die jeweils einen Rampenabschnitt komplementär zur zweiten Rampe (4) bilden.

5. System nach Anspruch 4, wobei die beiden Kontaktflächen (81, 82) des ersten Indexierungsabschnitts (8) auf beiden Seiten der Längsachse (Y-Y) angeordnet sind, und die beiden Kontaktflächen (91, 92) des zweiten Indexierungsabschnitts (9) auf beiden Seiten der Längsachse (Y-Y) angeordnet sind.

6. System nach einem der Ansprüche 1 bis 5, wobei der Blockierungsmechanismus ein Immobilisationssystem des Bremsstücks (5) translatorisch gemäß einer Längsrichtung umfasst, die von der Längsachse (Y-Y) definiert wird.

## Claims

1. A system for blocking a plug valve, the system comprising:
• a plug (1) that is movable in rotation about a longitudinal axis (Y-Y) and that is rotatably connected to a valve body, the plug (1) presenting a shaft (2) extending along the longitudinal axis; and
• a blocker part (5) mounted to be movable in translation along the longitudinal axis (Y-Y);
the system being **characterized in that**:
• the plug (1) presents an index portion comprising a first ramp (3) and a second ramp (4), the two ramps (3, 4) being arranged around the shaft (2), extending in the same direction and having oppositely-handed slopes about the shaft (2); and
• the blocker part (5) presents first and second index portions (8 and 9) adapted to come selectively into contact with the first and second ramps (3 and 4), respectively;
the blocker part (5) being configured so as to be capable of being positioned selectively in:
• a free position, in which the blocker part (5) is not in contact with the ramps (3, 4) of the plug (1); and
• a locking position in which the first and second index portions (8, 9) are respectively in contact with the first and second ramps (3, 4), such that the first ramp (3) and the first index portion (8) prevent the plug (1) from turning about the longitudinal axis (Y-Y) in a first direction of rotation, and the second ramp (4) and the second index portion (9) prevent the plug (1) from turning about the longitudinal axis (Y-Y) in a second direction of rotation, opposite to the first direction of rotation.

2. A system according to claim 1, wherein the index portion of the plug comprises a plate (11) arranged on the shaft (2) and extending radially around the shaft (2), the first and second ramps (3, 4) extending over a surface of said plate (11), said ramps (3, 4) being arranged concentrically around the shaft (2).

3. A system according to claim 1 or claim 2, wherein the first index portion (8) has a contact surface forming a ramp portion that is complementary to the first ramp (3), and the second index portion (9) has a contact surface forming a ramp portion complementary to the second ramp (4) .

4. A system according to claim 1 or claim 2, wherein the first index (8) has two contact surfaces (81, 82), each forming a ramp portion complementary to the first ramp (3), and the second index portion (9) has two contact surfaces (91, 92), each forming a ramp portion complementary to the second ramp (4).

5. A system according to claim 4, wherein the two contact surfaces (81, 82) of the first index portion (8) are arranged on opposite sides of the longitudinal axis (Y-Y), and the two contact surfaces (91, 92) of the second index portion (9) are arranged on opposite sides of the longitudinal axis (Y-Y).

6. A system according to any one of claims 1 to 5, including a blocking mechanism for preventing the blocker part (5) from moving in translation in a longitudinal direction defined by the longitudinal axis (Y-Y).
